# EUROPEAN PATENT APPLICATION

(11) **EP 2 402 914 A1**
(43) Date of publication of application: **04.01.2012**
(21) Application number: 10167780.5
(22) Date of filing: 29.06.2010
(51) Int. Cl.: G07C 9/00, G01V 8/10, G07B 15/00

(54) **Detector for the inspection of people**

(71) Applicant: Manneschi, Luca, 52100 Arezzo (IT)
(72) Inventor: Manneschi, Luca, 52100 Arezzo (IT)
(74) Representative: Texier, Christian

(57) **Abstract**

The invention concerns a detector for inspecting a person (P) comprising a gate (110) including two vertical walls (111, 112) and an upper structure (13) connecting the upper part of said walls (111, 112) and an image capturing device (120),
characterized in that the image capturing device (120) is fixed with respect to the gate (110) at a predetermined distance from a transverse median plane of the detector (100) extending between the two opposite walls (111, 112) of said detector (100), so that said camera (120) is capable of imaging most of the internal volume of the gate (110).

## Description

The invention concerns the technical field of detectors, such as metal detectors, designed for detecting non-authorized objects in a zone having protected access and for taking pictures of people passing through the detectors.

Such types of detectors are already known. For instance, the European patent application EP 1 750 147 discloses an example of such a detector in the form of a gate comprising two oblong-shaped vertical housings, a structure connecting an upper part of said vertical housings and emitting and receiving electrical coils provided in said housings.

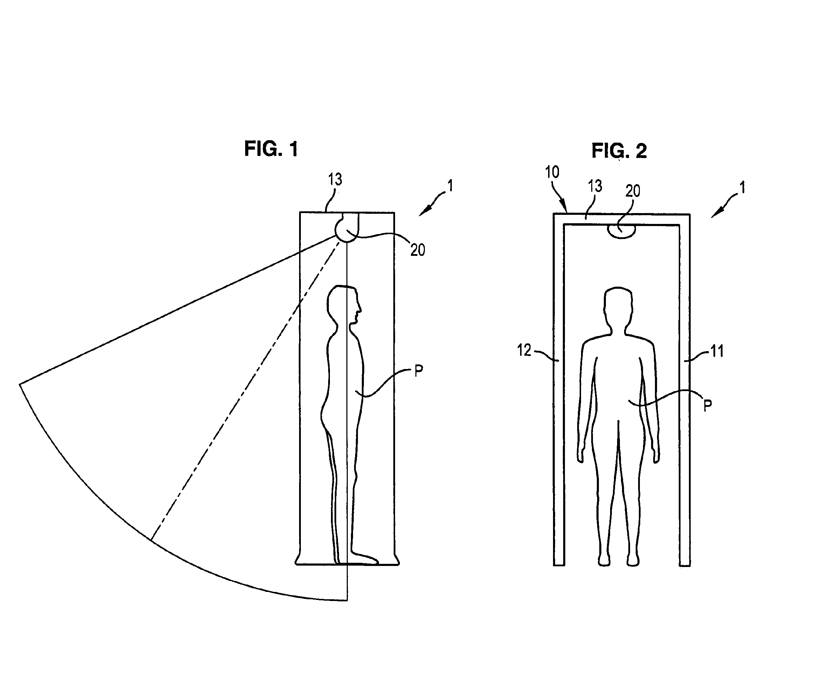

As illustrated in the enclosed figures 1 and 2, some detectors 1 can further comprise a camera 20 adapted to take pictures of the people passing through the gate 10. In that purpose, the camera 20 is usually located in the centre of the upper structure 13 of the gate 10, so that it extends right above the person P when said person P is passing through the detector 1. The use of the gate 10 as a support for the camera 20 allows for a correct framing of the person who is pictured since said person has to pass through a limited space defined by its lateral housings 11, 12.

The camera 20 is then activated when the detector 1 detects something, such as metal, and instantaneously records pictures of the person who set off the detector.

Nevertheless, this type of detector sometimes misses the person who set it off or does not provide a usable picture because of the morphology of the person, his/her posture while passing through the gate or because he/she passed too rapidly. Furthermore, whatever the lens used for the camera, only the very upper part of the person can be taken.

Nowadays, there is a need for providing a detector which can be used without supervision by an operator, for example when the detector is hidden, and capable of providing pictures of persons having suspect items whatever their height or their posture (bent, on their knees, etc.) when they pass through the detector.

In that purpose, the invention proposes a detector for inspecting a person comprising a gate including two vertical walls and an upper structure connecting the upper part of said walls and an image capturing device, wherein the image capturing device is fixed with respect to the gate at a predetermined distance from a transverse median plane of the detector extending between the two opposite walls of said detector, so that said camera is capable of imaging most of the internal volume of the gate.

Some of the preferred but non-limiting aspects of the detector in accordance with the invention are the following:
- the image capturing device is fixed to an arm which extends from the gate, on the exit side of said gate;
- said arm extends forward from the upper structure of the gate;
- said arm extends forward from one of the lateral walls of the gate, on the exit side of said gate;
- the image capturing device is mounted on a separate support which is fixed with respect to the gate or on the ceiling;
- the upper structure of the gate is a wide corridor and the image capturing device is fixed to a forward end of sad upper structure; and
- the detector further comprises one of the following sensors:
- a metal sensor,
- a sensor adapted to detect the presence of explosive material,
- a sensor adapted to detect the presence of a specific substance,
- a sensor adapted to detect ionizing radiations.

In accordance with a second aspect, the invention proposes a method for inspecting a person by using a detector in accordance with anyone of the preceding claims, the method comprising:
- imaging the person when said person is passing through the gate, and
- detecting a suspect item,
the method further comprising the buffering of the images taken by the image capturing device, and the detection of a suspect item sets off an automatic recording of relevant images among the buffered images corresponding to an interval of time starting before the detection of the suspect item (S) and ending after said detection.

Some of the preferred but non-limiting aspects of the method in accordance with the invention are the following:
- the method further comprises an automatic matching of the relevant images and the data corresponding to the suspect item detected during the detection step;
- the matching of the relevant images and the data is implemented in real time; and
- the buffering of the images is implemented during a predetermined time corresponding at least to the interval of time, the method further comprising an automatic erasure of said buffered images at the end of said predetermined time if no suspect item is detected, in order to replace them by new images.

The foregoing will be apparent from the following more particular description of example embodiments of the invention, as illustrated in the accompanying drawings given as non-limited examples, and in which:
Figure 1 shows a side view of a detector in accordance with the prior art;
Figure 2 shows a front view of the detector of Figure 1;
Figure 3 is a perspective view of a detector in accordance with one embodiment of the invention;
Figure 4 shows a side view of a detector in accordance with a second embodiment of the invention; and
Figure 5 is a flow diagram of a method for inspecting people in transit in accordance with the invention.

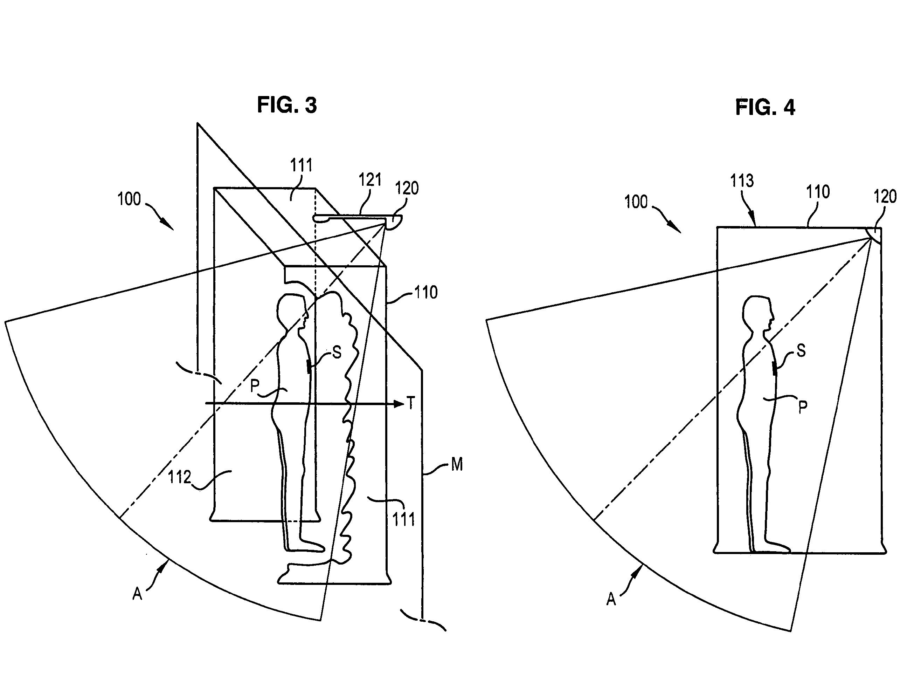

Figures 3 and 4 illustrate detectors 1 in accordance with the invention. A detector 100 is generally used for the inspection of people P in transit in an airport, at the entrance and/or exit of a public area such as a commercial centre, etc.

The detector 100 comprises a gate 110 and an image capturing device 120. In accordance with an embodiment, the gate 110 can be made of two vertical lateral walls 111, 112, parallel to each other, and an upper structure 113 extending therebetween. The gate 110 can be visible, such as at the entrance of a restricted area of an airport or a checking point, or hidden by some vegetation or advertisements, so that the person passing through does not realize that he/she is being checked for security reasons.

The lateral walls 111, 112 can house a plurality of sensors, such as in the detector of the aforementioned European patent application EP 1 750 147. For example, the walls 111, 112 can include at least one of a metal sensor, a sensor adapted to detect the presence of explosive material, a sensor adapted to detect the presence of a specific substance (drugs, etc.), or a sensor adapted to detect ionizing radiations.

The image capturing device 120 can be a camera adapted to take pictures or make movies. It is capable of imaging the people P who are passing through the gate 110, while being fixed with respect to the gate 10. In that purpose, the camera 120 is fixed at a predetermined distance from a transverse median plane M of the detector extending between the two opposite walls 111, 112 of the detector, wherein the plane M extends transversely to the transit direction T of the person P.

Furthermore, the camera 120 can follow the person P passing through the gate 110, or remain stationary.

In accordance with a first embodiment, as illustrated in figure 3, the camera 120 is mounted to the end of an arm 121 which is fixed to the upper part 113 of the gate 110, so that the camera 120 extends forward at a predetermined distance from the gate 110 and points at the interior space of the gate 110. As an alternative, the camera 120 is mounted to an arm extending forward from one of the lateral walls 111, 112.

Preferably, the arm 121 extends substantially horizontally from the gate 110. Furthermore, it can be fixed to the exit side of the gate 110.

In accordance with a second embodiment (see figure 4), the gate 110 is a wide corridor, so that the upper structure 113 of the gate is wide enough to enable the mounting of the camera 120 to a forward end (or exit side) of said structure 113, thereby allowing the camera 120 to take wide pictures of the people P passing through the gate 110.

In these configurations, the angle shot A of the camera is wider than in the prior art (see Figures 1 and 3) and allows a large and complete picturing of the person P. The length of the arm 121 and the lens of the camera 120 are optimized so that the important parts of the person P are framed by the camera 20. For example, at the entrance of a boarding area, the camera 120 can be positioned to that the person P is full-length pictured when he/she sets off the detector 100, in order to allow the localisation of the elements which where detected or at least record an image of this person for identification purpose.

These embodiments advantageously provide a detector 100 wherein the camera 120 and the gate 110 are connected and jointly move, so that the displacement of the detector 100 to another area does not require any subsequent adjustment of the camera 120 with respect to the gate 110. It therefore saves costs and provides images of the persons having the same quality, framing, and so on. The subsequent processing of the images and data sent by the detector is thus improved and facilitated to the operator.

In accordance with a third embodiment, the camera 120 is fixed to a support, distinct from the gate, located at a predetermined distance and angle from the gate 110. This support can be the ceiling, a leg, a desk, etc.

In any event, the camera 120 is located so that its angle shot A covers more and less all the internal volume of the gate 110.

In the following, we will describe a method in accordance with the invention for inspecting people in transit with the detector 100. As indicated above, the detector 100 in accordance with the invention simplifies and improves identification of the people by providing better images of the people P passing through it.

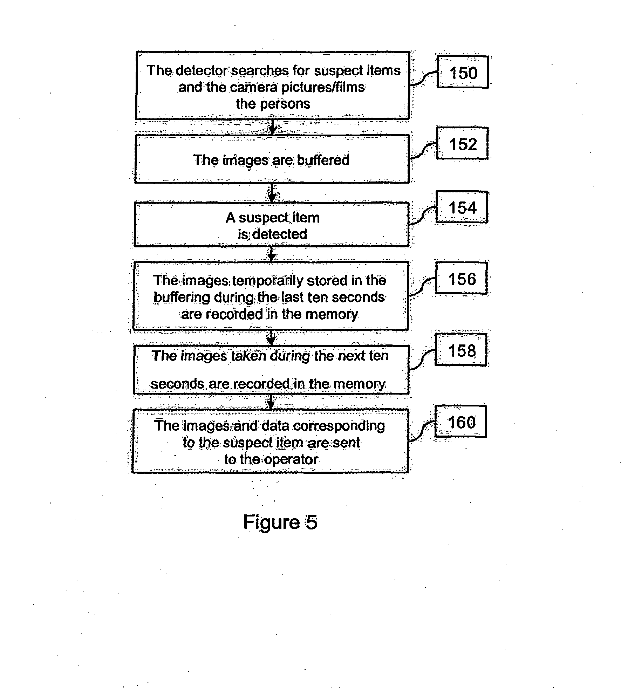

The detector 100 searches for suspect items S while the camera 120 takes pictures (see step 150 of Figure 5), which are continuously provided to a temporary buffer (step 152).

When a person P passes through the gate, the detector 100 can either sense a suspect item S, such as something made of metal, an explosive material, a specific substance (drug), etc. or sense nothing.

If the detector 100 senses at least one suspect item S (step 154), it thus sets off the recording of the relevant images taken by the camera 120 during an interval of time starting before the detection of the suspect item S and ending after said detection (step 158).

The time interval can last for example from two to thirty seconds before the time of detection, and from one to ten seconds after the detection. Preferably, the time interval lasts about five to ten seconds before the time of detection, and about five to ten seconds after the detection.

In that purpose, and in accordance with one embodiment of an invention, the detector 100 further comprises a memory adapted to temporarily store at least said relevant images, and a processing unit adapted to automatically record and send relevant images and data corresponding to the suspect item S detected during the detection step to an operator (step 160).

The data can include all the information collected by every sensor of the gate 10, or only the relevant information related to the suspect item S which was detected.

The memory is used as a buffer and is adapted to cyclically and temporarily store the images taken by the camera 120, and then progressively erase them if no suspect item S is detected in relation with the older temporarily stored images. In that way, only the relevant images, corresponding to the detection of a suspect item S, are saved and recorded in a dedicated memory, while the others are automatically erased by storing new pictures in place of the previous ones. For example, if the detector 100 senses metal on the person P who is passing through the gate 110, the images stored by the memory during the last ten seconds are saved, as well as the images taken in the next ten seconds and the data of the detection.

The dedicated memory can be housed in the detector 100 itself. As an alternative, the dedicated memory can be housed outside the detector 100, such as on a computer of the operator.

In any event, the data corresponding to the suspect item S detected during the detection step and the recorded images are sent in a single output to the operator, in order to save costs and time, which is then displayed to the operator.

If the detection only implied the recording of the images taken subsequently, as in the prior art, the operator would not be sure that the images represent the person who passed through the gate with the suspect item S. For example, if the suspect item S is located in the left shoe of the person, and if that person walks through the gate with the right foot forward, the detection only takes place when the left foot is brought inside the gate, close to the sensors. It might be too late for taking a relevant picture. To the contrary, by recording the images corresponding to a predetermined interval of time before the detection time in accordance with the invention, we thus make sure that, whatever the foot forward, we will have a good picture of the person.

If the detector 100 does not sense any suspect item S, no images are recorded to the dedicated memory since they would not be relevant for the operator.

In accordance with a second embodiment of the invention, every image is stored in the memory for a long period, such as twenty-four hours, and the selection of the images corresponding to a detection of a suspect item S is automatically implemented afterwards, for example by using a clock associated to each of the detection system and the camera 120. But in any case, the selected images which are associated to the data of the detector 1 correspond to a time interval starting before the detection and ending afterwards.

The processing unit can control the camera 120 so that, when a suspect item S is detected, the camera 120 moves, focuses or to the contrary expands the view, etc.

Furthermore, the detected data and the recorded images can be automatically matched together for their further processing by the operator, in real time or in a subsequent step.

Finally, the detector 100 of the invention can further comprise a direction sensor, comprising for example in-line optical beams and a control logic capable of determining the transit direction of a person passing through the gate. It becomes thus possible for the processing unit not to record images of people who are transiting in a wrong direction from the exit towards the entrance of the gate.

## Claims

1. A detector (100) for inspecting a person (P) comprising a gate (110) including two vertical walls (111, 112) and an upper structure (13) connecting the upper part of said walls (111, 112) and an image capturing device (120),
**characterized in that** the image capturing device (120) is fixed with respect to the gate (110) at a predetermined distance from a transverse median plane of the detector (100) extending between the two opposite walls (111, 112) of said detector (100), so that said camera (120) is capable of imaging most of the internal volume of the gate (110).

2. The detector of claim 1, wherein the image capturing device (120) is fixed to an arm (121) which extends from the gate (110), on the exit side of said gate (110).

3. The detector of claim 2, wherein said arm (121) extends forward from the upper structure of the gate (110).

4. The detector of claim 2, wherein said arm (121) extends forward from one of the lateral walls (111, 112) of the gate (110), on the exit side of said gate (110).

5. The detector of claim 1, wherein the image capturing device (120) is mounted on a separate support which is fixed with respect to the gate (110) or on the ceiling.

6. The detector of claim 1, wherein the upper structure of the gate (10) is a wide corridor and the image capturing device (120) is fixed to a forward end of sad upper structure (113).

7. The detector of anyone of claims 1 to 6, further comprising one of the following sensors:
a metal sensor,
a sensor adapted to detect the presence of explosive material,
a sensor adapted to detect the presence of a specific substance,
a sensor adapted to detect ionizing radiations.

8. A method for inspecting a person by using a detector (100) in accordance with anyone of the preceding claims, the method comprising:
- imaging the person (P) when said person (P) is passing through the gate (110), and
- detecting a suspect item (S),
**characterized in that** it further comprises the buffering of the images taken by the image capturing device (120), and the detection of a suspect item (S) sets off an automatic recording of relevant images among the buffered images corresponding to an interval of time starting before the detection of the suspect item (S) and ending after said detection.

9. The method of claim 8, further comprising an automatic matching of the relevant images and the data corresponding to the suspect item (S) detected during the detection step.

10. The method of claim 9, wherein the matching of the relevant images and the data is implemented in real time.

11. The method of anyone of claims 8 to 10, wherein the buffering of the images is implemented during a predetermined time corresponding at least to the interval of time, the method further comprising an automatic erasure of said buffered images at the end of said predetermined time if no suspect item (S) is detected, in order to replace them by new images.
